# EUROPEAN PATENT SPECIFICATION

(11) **EP 3 525 972 B1**
(45) Date of publication and mention of the grant of the patent: **22.06.2022**
(21) Application number: 17783564.2
(22) Date of filing: 06.10.2017
(51) Int. Cl.: B23D 65/02, B23D 65/04, B23K 26/04

(54) **METHOD OF MANUFACTURING A TOOTHED BLADE AND APPARATUS FOR MANUFACTURING SUCH A BLADE**
VERFAHREN ZUR HERSTELLUNG EINER VERZAHNTEN KLINGE UND VORRICHTUNG ZUR HERSTELLUNG SOLCH EINER KLINGE
PROCÉDÉ DE FABRICATION D'UNE LAME DENTÉE ET APPAREIL POUR LA FABRICATION D'UNE TELLE LAME

(30) Priority: 14.10.2016 GB 201617474
(43) Date of publication of application: 21.08.2019
(73) Proprietor: Liberty Performance Steels Limited, London, Greater London W1J 7RH (GB)
(72) Inventor: JUKES, Carl, West Bromwich West Midlands B70 8BH (GB); HORAN, Michael, West Bromwich West Midlands B70 8BH (GB)
(74) Representative: Barker Brettell LLP
(86) International application number: PCT/GB2017/053030
(87) International publication number: WO 2018/069677

(56) References cited:
- CN-A- 102 145 412
- DE-A1-102007 036 644
- JP-A- 2003 145 344
- JP-A- 2004 058 259
- US-A1- 2009 114 064

## Description

The present invention relates to a method of producing toothed blades from a strip material, according to the preamble of claim 1, and relates also to a toothed blade production line according to the preamble of claim 9.

In particular, the present invention relates to the manufacture of saw blades produced from a strip material (e.g. bi-metallic, carbon and carbide strip material), e.g. band-saw blades, hack saw blades, reciprocating saw blades, wood bandsaws, food bandsaws, and metal-cutting bandsaws.

Toothed blades used for band-saws, hack saws, reciprocating saws, holesaws, wood bandsaws, food bandsaws, metal-cutting bandsaws or the like generally comprise a length of strip material having a plurality of teeth cut into one edge. These types of saw require a generally straight length of toothed cutting material as opposed to circular saws which require a circular shaped saw blade with circumferential teeth.

It is a known manufacturing method to produce a band-saw blade by machining (e.g. milling/grinding) a number of teeth into the edge of a length of strip material. The machining process is slow and limits the speed at which saw blades can be produced from the resulting toothed length of strip material. In order to increase the rate of production of saw blades the strip material may be machined in batches. This is done by aligning a number (e.g. 40) of lengths of material side by side and machining the teeth on each length in the batch simultaneously.

While this method may improve the rate of saw blade production it has a number of drawbacks. The strips must be a consistent and uniform size and shape, and must have the same overall coil length, so that they can be aligned together in a batch for machining. Additional steps must therefore be taken in the production of the strips to ensure that they are consistent and correctly aligned. This makes the production of the strips and saw blades more time consuming and leads to increased waste material when cutting the strips to matched lengths.

JP2004058259 (A) discloses a method according to the preamble of claim 1, in particular a method for forming saw teeth, in which a focus position of a condenser lens provided on a laser beam machining head is located roughly on a centre of thickness of sawblade matrix material, and saw teeth are formed by pulse laser with using inert gas. Disclosed is a matrix material supply means supplying sawblade matrix material to be the sawblade to a laser beam machining part, matrix material gripping means gripping the supplied sawblade matrix material, and the laser machining head moving in X, Y directions in relation to the sawblade matrix material gripped by the matrix material gripping means and forming saw teeth.

JP2004058259A also discloses a toothed blade production line according to the preamble of claim 9.

US2009114064 (A1) discloses a method for manufacturing of preforms for saw blades respectively saw bands, comprising the following steps: (a) arranging a strip of a cutting material for a cutting edge of saw blades respectively saw bands without any play between the edges of a first carrier band and a second carrier band; (b) guiding of a laser or electron beam along a first edge of the strip for welding part per part of the first carrier band to the strip, wherein regions along the first edge of the strip remain unwelded; (c) guiding of a laser or electron beam along a second edge of the strip for welding part per part of the second carrier band to the strip, wherein regions along the second edge of the strip remain unwelded; and (d) guiding a laser, water or electron beam between the first edge and the second edge of the strip or the second edge and the first edge of the strip for separating of the strip into segments.

JP2003145344 (A) discloses a band saw cutting edge manufacturing method that comprises a bonding step of bonding a barrel portion material to a tooth portion material having higher hardness than the barrel portion material to form a band saw cutting edge base and a gear cutting step of irradiating the band saw cutting edge base with a converged heat cutting beam and blowing inactive gas thereto after completing the bonding step for gear cutting work with fusion to form a tooth group consisting of a number of teeth.

CN102145412 (A) discloses a grinding-free method for forming a double-metal band sawtooth at one time through laser cutting. The method comprises the following steps of: selecting a laser with appropriate power and laser beam wavelength, and a focus lens with a specific focal length according to the material properties of high-speed steel and composite steel bands of spring steel and focusing to reduce a far-field divergence angle of a laser beam, and acquiring the focus depth of the laser beam which is greater than the thickness of the material to eliminate the taper and the circular arc in the cutting direction; and adjusting a cutting speed, auxiliary air pressure and clearance between a focal point and a surface to improve slagging capacity and a cooling speed of a cutting surface, and reduce and eliminate the hot influence area.

The present application provides a method of producing toothed blades from a strip material and a toothed blade production line as defined in the appended claims 1 and 9 respectively.

Optional features are defined in the dependent claims.

According to a first aspect of the invention, a method of producing toothed blades from a strip material is defined, the method comprising: laser cutting the strip material to form a plurality of teeth in an edge of the strip material; and mechanically machining the strip material to remove at least part of a heat-affected portion of the edge resulting from the laser cutting.

The present invention provides a combination of laser cutting and mechanical machining steps to produce toothed blades from a strip material. The time required to mill teeth into the strip material can be reduced by the use of laser cutting, while any heat-affected region resulting from the laser cutting can be removed using a subsequent quick or light machining process. Once cut in this way, the resulting toothed strip material can be cut into a number of individual saw blades. The present invention may therefore allow the efficient production of a number of different tooth-geometry saw blades from a single continuous length of strip material. This allows the production rate and/or yield of saw blades to be increased compared to prior art methods.

Optionally, the laser cutting is controlled to restrict the extent of the heat-affected portion. This allows the amount of material that must be removed by the mechanical machining step to be reduced. This means that the mechanical machining step can be performed quickly enough to the integrated into a continuous production method with the laser cutting step.

Optionally, the laser cutting is controlled by setting one or more parameters of a laser beam used to cut the strip material, and preferably wherein the one or more parameters comprise the laser beam power. The extent of the heat-affected portion may be controlled by appropriately setting the parameters of the laser beam. Controlling the power of the laser beam may provide a convenient method of accurately controlling the heat-affected portion by reducing the amount of heat conducted away from the cutting point.

Optionally, the laser cutting is controlled by setting the rate of relative movement between the metal strip material and the laser beam used to cut the strip material. By altering the time or focus that the laser beam is incident on a particular area of the strip material the extent of heat conduction away from the cutting point may be accurately and conveniently controlled to limit the extent of the resulting heat-affected portion.

Optionally, the laser cutting comprises near-net shaping of the metal strip material. This allows the approximate required shape of the teeth to be created by the laser cutting process, with only a quick, light, mechanical machining step required to produce the final toothed strip material.

Optionally, the laser cutting comprises cutting the strip material to produce a heat-affected portion extending less than 0.3 mm into a body of the strip material. This allows the heat-affected portion to be quickly removed by the mechanical machining by reducing the need to remove a large amount of material.

Furthermore according to the first aspect of the invention, the method further comprises heat treating the strip material before the laser cutting step. This may avoid damage to the teeth during the heat treating process. This differs from prior art methods where laser cutting is not used. In such prior art methods heat treating must be done after the teeth are cut when the bi-metal strip material is not too hard for mechanical machining. The heat treating may comprise heating the strip material to a temperature suitable to harden the material (or both harden and temper the strip material e.g. in the case of processing a bi-metallic strip material). The temperature to which it is heated may be chosen according to the type of material (e.g. type of metal or metal alloys) from which the strip material is formed. The combination of heat treatment followed by cutting the strip material to form teeth advantageously allows the heat treatment to be performed while minimising adverse effects on the shape of the teeth. This combination and processing order is not usually possible using prior art mechanical cutting techniques.

Optionally, the method further comprises setting at least one of the plurality of teeth, wherein setting the tooth comprises angling the at least one tooth relative to the body of the strip material. When the tooth profiles have been laser cut into the strip material, they are in line with the body of the strip. The teeth may be set (angled out from the body) to facilitate cutting and prevent binding of the blade body during cutting. Optionally, the plurality of teeth are set to vary in angle along the length of the strip material. Optionally, the tooth is set after the mechanical machining step.

Optionally, the strip material comprises a bi-metal strip. Optionally, the bi-metal strip comprises a first metal or alloy and a second metal or alloy, and wherein the first metal or alloy is harder that the second metal or alloy, and wherein the laser cut edge of the bi-metal strip material is formed from the first metal or alloy. The teeth may be cut into the harder part of the bi-metal material to provide a hard wearing cutting edge, while the softer part of the bi-metal strip material provides improved durability by reducing the risk of cracking. Optionally, the strip material comprises a single metal or alloy, and wherein the laser cut edge of the strip is formed in the single metal or alloy.

Optionally, the method further comprises providing relative conveying movement between the strip material and a laser cutting apparatus in which the laser cutting occurs, and between the strip material and a mechanical machining apparatus in which the mechanical machining occurs. Optionally, providing the relative conveying movement comprises conveying the strip material through the laser cutting apparatus, the mechanical machining apparatus and a heat treatment apparatus arranged to perform the heat treatment.

A continuous length of strip material may be conveyed through the apparatus used to perform the method, rather than requiring the manufacturing to be done in batches.

Optionally, the method further comprises feeding the strip material from a spool, or coil, to the laser cutting apparatus. This allows the strip material to be cut in a single length, rather than machining separate lengths in batches.

Optionally, the relative conveying movement rate is between 0.5 m/min and 5 m/min.

This rate allows adequate time for the laser cutting and the mechanical machining to be carried out as the material strip passes through the laser cutting and mechanical machining apparatus. This allows continuous, single length production to be achieved compared to prior art batch productions techniques.

Optionally, the method further comprises dividing the strip material into multiple toothed blade lengths following the mechanical machining step. Optionally, the strip material comprises a length from which multiple toothed blades can be produced. This means that multiple toothed-blades can be manufactured from a single length of toothed strip material compared to prior art batch production techniques where individual blades are machined separately.

According to a second aspect of the invention, there is also provided a toothed blade production line arranged to produce toothed blades from strip material, the production line comprising: a laser cutting apparatus arranged to cut a plurality of teeth into an edge of the strip material; and a mechanical machining apparatus arranged to remove at least part of a heat-affected portion of the edge resulting from the laser cutting.

Optionally, the laser cutting apparatus is arranged to control the extent of the heat affected portion. This will reduce the amount of time required to perform the mechanical machining step by reducing the amount of material that must be removed.

Optionally, the laser cutting apparatus is controlled to restrict the heat affected portion by controlling one or both of the power or focus (e.g. spot size) of a laser beam used to cut the strip material, or the rate of relative movement between the strip material and the laser beam, or both. This provides a convenient and accurate means to reduce the heat conduction away from the cutting point to reduce the extent of the heat affcctcd-portion of the strip material.

Optionally, the laser cutting apparatus is arranged to produce a heat affected portion extending less than 0.3 mm into a body of the strip material. This may reduce the time taken to perform the mechanical machining step such that both the laser cutting and mechanical machining can be performed on a single, continuous length of strip material.

Optionally, the laser cutting apparatus comprises a pulsed fiber laser. This allows the strip material to be cut quickly without a large heat-affected portion being created.

Furthermore, according to the second aspect of the invention, the toothed blade production further comprises a heat treatment apparatus arranged to heat treat the strip material before it is cut by the laser cutting apparatus. This may avoid damage to the teeth during the heat treating process.

Optionally, the strip material comprises a bi-metal strip material comprising a first metal or alloy and a second metal or alloy, and wherein the first metal or alloy is harder than the second metal or alloy, and wherein the edge of the metallic strip material is formed from the first metal or alloy, and preferably wherein the first metal is formed from a high-speed-steel grade material. The teeth may be cut into the harder part of the strip material to provide a hard wearing cutting edge, while the softer part of the bi-metal strip material provides improved durability by reducing the risk of cracking.

Optionally, the toothed blade production line further comprises a tooth setting apparatus arranged to set the tooth ofat least one of the plurality of teeth. Optionally, the tooth setting apparatus is arranged to set the teeth following the mechanical machining. The tooth setting apparatus may be arranged to set the angle of individual teeth away from the body of the toothed blade.

Optionally, the toothed blade production line further comprises a conveying mechanism arranged to provide relative conveying movement between the strip material and the laser cutting apparatus and between the strip material and the mechanical machining apparatus. Optionally, the conveying mechanism is arranged to convey the strip material through the laser cutting apparatus , the mechanical machining apparatus and the heat treatment apparatus. This may allow a continuous length of strip material to be moved through the apparatus, rather than requiring the manufacturing to be done in batches.

Optionally, the toothed blade production line further comprises a feeder mechanism for feeding the strip material from a spool, or coil, to the laser cutting apparatus. This allows the strip material to be cut in a single length, rather than machining separate lengths in batches.

Optionally, the toothed blade production line further comprises a dividing apparatus arranged to divide the strip material into multiple toothed blade lengths after removal of at least part of the heat affected portion. Optionally, the strip material comprises a length from which multiple toothed blades can be produced. This allows a single length of strip material to be divided into individual toothed-geometry blades once the teeth have been cut and any heat-affected portion removed. This will provide more efficient production compared to prior art batch production techniques.

Embodiments of the invention will now be described, by way of example only, with reference to the accompanying drawings, in which:
**Figure 1** is a representation of a method of producing toothed blades from strip material according to an embodiment; and
**Figures 2A, 2B and 2C** show close-up views of a section of bi-metal strip material at different stages during the method shown in Figure 1;
**Figures 2D, 2E and 2F** show close up views of a non-composite strip material at different stages during the method shown in Figure 1;
**Figure 3** shows a representation of a method of producing toothed blades from strip material according to another embodiment;
**Figure 4** shows a schematic representation of a toothed blade production line according to an embodiment; and
**Figure 5** shows a schematic representation of a toothed blade production line according to another embodiment.

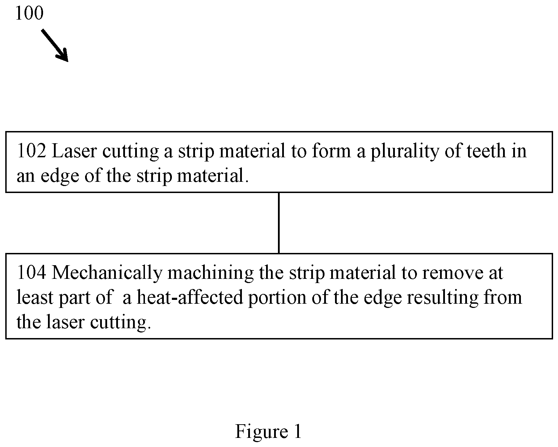

A method 100 of producing toothed blades from a strip material is shown schematically in Figure 1. The method 100 is suitable for producing toothed blades such as saw blades, including for example band-saw blades; hack saw blades; reciprocating saw blades; and holesaw blades. The method is however not limited to producing saw blades, but may also be used to manufacture other articles such as knives or other tools.

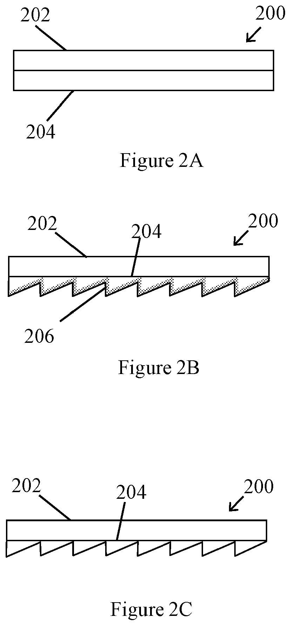

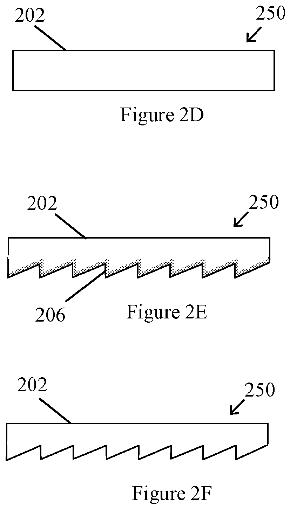

The toothed blades may be produced from a variety of materials. In some embodiment, the strip material comprises a metallic strip such as a steel strip. In some embodiments the strip material is formed from a bi-metal, carbon metal alloy or metal carbide strip material. A section of a bi-metal strip material 200 is shown schematically in Figures 2A, 2B and 2C at various stages of the method 100. Figures 2D, 2E and 2F represent non-composite strip 250 produced in the same manner. As can be seen in Figure 2A, the bi-metal strip material 200 begins as a generally elongate strip formed from a first metal (or metal alloy) 202 and a second metal (or metal alloy) 204 joined together by welding or the like as is known in the art. The first and second metals 202, 204 may have differing properties to provide a saw blade having a suitable combination of cutting speed and durability.

In some embodiments, the first metal (or alloy) 202 may be harder than the second metal (or alloy) 204, and may for example, be formed of high speed steel. In such an embodiment, the teeth of the toothed blade may be formed from the first metal 202 so as to provide a hard material for cutting. As the second metal 204 is comparatively softer it may reduce the brittleness of the overall toothed blade. This may therefore provide an advantageous balance between fast cutting (using the relatively hard first metal 202) and durability (as the second relatively soft metal 204 is not as susceptible to cracking).

In other embodiments, the toothed blades may be produced from a metal strip made from a material other than a bi-metal. The toothed blades may, for example, be made from a metal strip material comprising a single metal, or any other number of metal, metals or alloys or other materials. Figures 2D, 2E and 2F show an embodiment in which a non-composite strip 250 is processed. In this embodiment, the strip material comprises a single material, such as a single metal 202. Teeth are cut into the edge of the metal 202 to again form a heat-affected portion 206.

The method 100 comprises laser cutting 102 the strip material to form a plurality of teeth in an edge of the strip material. The teeth may be cut using a laser cutting apparatus arranged to direct laser radiation onto the surface of the strip to cut the material via localised heating as is known in the art. The laser cutting apparatus may comprise a single cutting laser that is directed to the strip from a single direction (e.g. to cut from one surface of the strip material). In other embodiments, the laser cutting apparatus may comprise a first and a second laser arranged such that they oppose each other to cut from each surface of the strip material. This may reduce the burr produced by the laser cutting. In the described embodiment, a single edge of the strip material 200, 250 may be cut to form teeth. In other embodiments, any number of edges or parts of the strip material 200, 250 may be cut by the laser cutting processes 102 to form the teeth.

During the laser cutting step a heat-affected portion 206 (or heat-affected zone) of the strip material 200, 250 is produced as a result of the heat required to cut the material.

The heat-affected portion 206 is created by conduction of heat in the material away from and around the cutting point. Where the metal (or other material) forming the strip is heated a phase change can occur within the structure leading to undesirable properties. The heat affected-portion 206 may be formed adjacent or along the cut edge of the strip material 200, 250 as shown in Figures 2B and 2E.

The method 100 further comprises mechanically machining 104 the strip material 200, 250 to remove at least part of the heat-affected portion 206. In some embodiments, all of the heat-affected portion 206 may be removed by the mechanical machining. In other embodiments, only part of the heat-affected portion 206 is removed. In some embodiments, the mechanical machining step may remove both the heat-affected portion 206 and a part of the strip material not affected by the laser cutting step 102.

The mechanical machining 104 may comprise any suitable method of machining the strip material 200, 250 to remove the required material. The mechanical machining 104 may comprise milling, grinding, drilling or any other suitable machining method. By mechanical machining we mean removing material using a cutting or grinding tool or the like as opposed to removal of material via laser cutting or the like.

By providing a combination of both laser cutting and mechanical machining the method 100 allows the efficient production of a continuous length of toothed strip material. Prior art methods which rely solely on mechanical machining must use batch production because the machining of the teeth is slow. The method 100 uses a combination of laser cutting to rapidly cut teeth into the bi-metal strip material, followed by a rapid mechanical machining step to remove any heat affected-portion resulting from the laser cutting. The inventors have found that this combination of cutting processes may allow a more efficient, continuous length production process with a fast rate of production. This makes production of toothed blades quicker, more efficient and reduces waste compared to prior art batch milling methods.

The laser cutting 102 may comprise near-net shaping of the strip material 200, 250. By near-net shaping we mean that the laser cutting step 102 cuts the teeth close (but not completely) to the final desired shape. The mechanical machining step 104 then provides a rapid finishing step to give the final desired shape of the cutting teeth.

In some embodiments, the geometry of the plurality of teeth may vary along the length of the strip material. This may be achieved by altering the shape cut by the laser cutting, the shape cut by the mechanical machining, or both. This allows a single length of strip material to be produced having various tooth geometries along its length. Such a strip material can later be cut into separate lengths of toothed blade, each with differing tooth geometries. This is advantageous over prior art batch production methods where a batch of toothed blades are machined with the same geometry.

The laser cutting step 102 may be controlled in order to restrict the extent of the heat-affected portion 206. This may allow the heat-affected portion 206 to be reduced in size such that it can be quickly removed during the following mechanical machining step 104, while still allowing the strip material to be quickly cut by the laser.

In some embodiments, the laser cutting 102 may be controlled by setting one or more parameters of the laser beam(s) used to cut the strip material 200, 250. The one or more parameters may comprise the laser beam power. This may provide a simple and accurate control of the extent of the heat-affected portion 206. By reducing the laser beam power, the heat-affected portion 206 may be reduced as less heat is generated in the bi-metal strip material 200 during cutting.

In other embodiments, other parameters of the laser beam(s) may be set to control the heat-affected portion 206. This may include, for example, the laser intensity, spot size, focus at the cutting point or type of laser used (i.e. the wavelength of laser radiation used).

In yet other embodiments, the laser cutting 102 may be controlled by setting the rate of relative movement between the strip material 200, 250 and the laser beam(s) used to cut the strip material. By increasing the rate of relative movement the amount of time the laser is incident on a particular part of the strip material 200, 250 is reduced. This reduces the heat generated in the material and thus reduces the extent of the heat affected portion 206.

The laser cutting 102 may be controlled to optimise its speed while still producing a heat-affected portion 206 that can be quickly removed by the mechanical machining step 104. In some embodiments, the laser cutting 102 may comprise cutting the strip material 200, 250 to produce a heat-affected portion 206 extending less than 0.3 mm into a body of the strip material 200, 250 (e.g. the heat-affected portion may extend less than 0.3 mm away from the cut edge of the strip material 200, 250). This has been found to allow rapid machining of the strip material 200 to remove the heat-affected portion 206 and provide an improved rate of production of toothed blades.

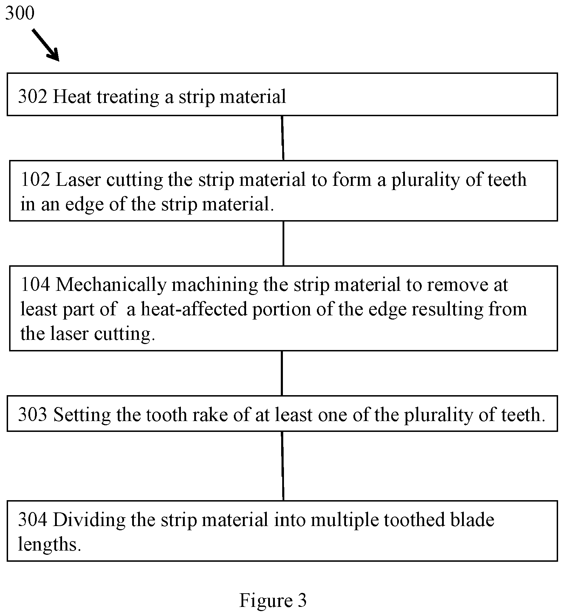

In other embodiments, the heat-affected portion 206 may extend any other amount from the cut edge of the bi-metal strip material, and may, for example extend 0.05 mm, 0.1 mm, 0.15 mm, 0.2 mm, 0.25 mm, 0.3 mm, 0.35 mm, 0.4 mm, 0.5 mm, 0.6 mm, 0.7 mm, 0.8 mm, 0.9 mm, 1 mm or any range in between any of those valves. Another embodiment of a method of producing toothed blades from a strip material 200, 250 is shown in Figure 3. Any of the features discussed in relation to the first embodiment 100 may also be included in the second embodiment 300 shown in Figure 3, and *vice versa.* The method 300 also includes the mechanical machining step 102 and the laser cutting step 104. The method 300 further comprises heat treating 302 the bi-metal strip material 200, 250 before the laser cutting step 102, and tooth-setting 303 as will be explained later.

The heat treating step 302 may comprise heating the strip material to a temperature suitable to harden the metal as is known in the art. The temperature to which it is heated is chosen according to the type of metal (or metal alloys) from which the strip material 200, 250 is formed. According to the invention, by heat treating the strip material 200, 250 before teeth are cut into its edge damage or distortion to the shape of those teeth may be avoided. This is in contrast to prior art methods in which heat treating takes place after teeth are machined into the edge of the strip material 200, 250. In the prior art this is done to allow the material to be machined while it is still relatively soft. The use of laser cutting allows the hardened strip material 200, 250 to be cut (as laser cutting can be used to cut harder material in comparison to other methods) after heat treatment has taken place. In other embodiments, the heat treatment step 302 may not be included in the method 300, or may be performed at a later stage (e.g. after laser cutting and/or after mechanical machining).

In some embodiments, the method 100, 300 may further comprise setting 303 the tooth rake of at least one of the plurality of teeth, wherein setting the tooth rake comprises angling at least one of the teeth relative to the body of the strip material 200, 250. The angle of the plurality of teeth may be set such that they vary along the length of the strip material 200, 250. In other embodiments, the angle may be set to be the same along the length of the strip material 200, 250. By setting the angle or rake of the teeth more efficient cutting may be achieved as is known in the art. The tooth setting step 203 may be included after the mechanical machining step 104 as shown in Figure 3. In other embodiments, the tooth setting step may be included at any other suitable point in the method.

In some embodiments, the method 100, 300 may further comprise dividing 308 the strip material 200, 250 into multiple toothed blade lengths following the mechanical machining step 104 (and the teeth setting step 303 if included) as shown in Figure 3. This may be done by cutting the strip material. In other embodiments, the strip material 200 may be wound around an output spool after the mechanical machining 104 to be used in a single length or divided into individual toothed blades in a separate process

In some embodiments, the method of producing toothed blades 100, 300 further comprises providing relative conveying movement between the strip material 200, 250 and the laser cutting apparatus in which the laser cutting 104 occurs, and between the strip material 200, 250 and a mechanical machining apparatus in which the mechanical machining 104 occurs. The strip material 200, 250 may, in some embodiments, be conveyed through both the laser cutting apparatus and the mechanical machining apparatus. The relative conveying movement may be provided by a conveying mechanism arranged to move the strip along a processing path through a production line adapted to perform the method 100, 300. The conveying mechanism may comprise a guide means comprising one or more rollers or the like which may be driven to convey the strip material 200, 250. In some embodiments, the conveying movement may comprise feeding of the strip material 200 from a spool (or coil), to the laser cutting apparatus arranged to perform the laser cutting step 102. Following the laser cutting apparatus the strip may be conveyed to the mechanical machining apparatus so that the heat-affected portion of the strip can be removed. In some embodiments, the strip material 200, 250 may be conveyed in a continuous length (e.g. from the input spool) through both the laser cutting apparatus and the mechanical machining apparatus.

The strip material 200, 250 may comprise a length from which multiple toothed blades can be produced. This allows continuous production of a length of toothed strip suitable to provide a number of separate toothed blade lengths, with each length being suitable to form an individual saw blade. In some embodiments, the separate toothed blades may have differing tooth geometries where the tooth geometry is varied along the length of the strip material.

In some embodiments, the relative conveying movement rate may be between 0.5 m/min and 5 m/min. This provides fast production of strip material 200, 250 having a cut toothed edge. This conveying movement rate may be achieved by using a combination of fast laser cutting and rapid mechanical machining.

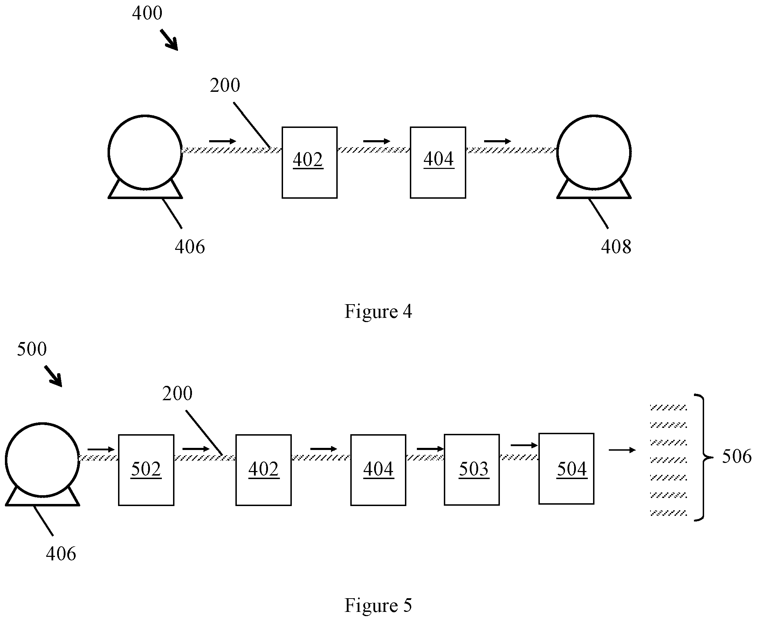

A toothed blade production line 400 arranged to produce toothed blades from strip material 200, 250 is shown schematically in Figure 4. The production line 400 comprises a laser cutting apparatus 402 arranged to cut a plurality of teeth into an edge of the strip material 200, 250 as described above. The laser cutting apparatus 402 may comprise a laser cutting station having at least one laser arranged to cut teeth into an edge of the strip material 200. In some embodiments, the laser cutting apparatus may comprise one or more lasers directed towards one face or surface of the strip material 200, 250. In other embodiments, the laser cutting apparatus may comprise at least two opposing (e.g. co-axially aligned) lasers arranged to cut the strip material 200, 250 from each of its opposing faces. This may allow any burr created during the cutting process to be minimised. The laser cutting apparatus may be arranged to vary the geometry of the teeth along the length of the strip material as described above.

The laser cutting apparatus 402 may be arranged to provide relative movement between the one or more lasers and the strip material 200, 250 such that the required tooth pattern may be cut. This may be done by moving the laser beam(s) (e.g. by moving a laser cutting head) relative to the strip material 200, 250, which may be kept stationary. In other embodiments, the relative movement may be provided by moving the strip material 200, 250 relative to a stationary laser beam(s) (or laser cutting head). In yet other embodiments, both the strip material 200, 250 and the laser beam(s) may be moved. The strip material 200, 250 may be moved relative to the laser beam(s) (or laser cutting head) in a direction along the length of the strip material. The laser beam(s) may also be moved in a direction perpendicular to the length of the strip to provide the necessary directions of relative movement to cut the teeth.

In some embodiments, the laser cutting apparatus 402 comprises one or more pulsed fiber lasers arranged to cut the strip material 200. By using a pulsed fiber laser, the laser cutting apparatus can quickly cut the teeth into the strip material 200, 250 while minimising the extent of the heat-affected portion. In other embodiments, other suitable types of laser may be used, such as a CO₂ laser.

The production line 400 further comprises a mechanical machining apparatus 404 arranged to remove at least part of the heat-affected portion 206 of the edge resulting from the laser cutting. In some embodiments, the mechanical machining apparatus 404 may comprise a milling or grinding device arranged to remove at least the heat-affected portion of the strip material 200, 250.

The laser cutting apparatus 402 may be arranged to control the extent of the heat affected portion. In some embodiments, the laser cutting apparatus 402 may be arranged to produce a heat affected portion 206 extending less than 0.3 mm into a body of the strip material 200, 250. This may allow the heat-affected portion 206 to be removed by a rapid mechanical machining step that is fast enough to allow efficient continuous processing of the strip material 200, 250.

The extent of the heat-affected portion 206 may be controlled by controlling the amount of heat imparted to the strip material 200, 250 during the laser cutting. Reducing the heat generated by the cutting laser(s) reduces the heat conducted from the cutting point into the surrounding metal and therefore reduces the extent of the heat-affected portion 206. A balance must however be found between reducing the level of conducted heat while still providing adequate heat to efficiently cut the strip.

The laser cutting apparatus 402 may be controlled to restrict the heat-affected portion 206 by controlling a parameter of the laser beam(s). In some embodiments, the laser beam(s) power may be controlled. In other embodiments, the intensity or spot size at the surface of the strip material 200, 250 may be controlled. Additionally or alternatively, the rate of relative movement between the strip material 200, 250 and the laser beam(s) may be controlled to limit the extent of the heat-affected portion 206. For example, greater relative movement between the strip material 200, 250 and the laser beam(s) may reduce the amount of time that heat has to conduct through the material and so may reduce the extent of the heat-affected portion 206.

The toothed blade production line 400 may further comprise a conveying mechanism (not shown in the Figures) arranged to provide relative conveying movement between the strip material 200 and the laser cutting apparatus 402 and between the strip material 200 and the mechanical machining apparatus 404.

The conveying mechanism may be arranged to convey the strip material 200, 250 along a processing path through the production line 400. The conveying mechanism may therefore be arranged to convey the strip material 200, 250 through both the laser cutting apparatus 402 and the mechanical machining apparatus 404, and through any other components of the production line (e.g. a heat treatment apparatus, tooth-setting apparatus, and a dividing apparatus if provided).

The conveying mechanism may comprise one or more rollers arranged to support the strip material 200, 250 along its length. In some embodiments, one or more of the rollers may be driven to move the strip material 200, 250 along the processing path.

The production line 400 may further comprise a feeder mechanism 406 for feeding (either directly or indirectly) the strip material 200, 250 from a spool, or coil, to the laser cutting apparatus 402. An output spool or coil 408 may also be provided on which the finished toothed strip material 200, 250 may be coiled.

Another embodiment of a toothed blade production line 500 is shown in Figure 5. The production line 500 shown in Figure 5 also comprises the laser cutting apparatus 402 and the mechanical machining apparatus 404. Any of the features described herein may be used in either the production line 400 shown in Figure 4 or the production line 500 shown in Figure 5.

As shown in Figure 5, the production line 500 further comprises a heat treatment apparatus 502. The heat treatment apparatus 502 may comprise a furnace or induction heating device or the like. The heat treatment apparatus may be arranged to heat the strip material 200, 250 to a temperature suitable to harden the metal from which it is formed. According to the invention, heat treatment apparatus 502 is arranged to heat treat the strip material 200, 250 before it is cut by the laser cutting apparatus 402.

In the described embodiment, the heat treatment apparatus 502 is arranged such that it precedes the laser cutting apparatus 402 along the processing path followed by the strip material 200. The strip material 200 therefore through the heat treatment apparatus 502 before reaching the laser cutting apparatus 402.

The toothed blade production line 400, 500 may further comprise a tooth setting apparatus 503. The tooth setting apparatus may be arranged to angle at least one, or a plurality of, the teeth once they have been cut. The tooth setting apparatus may be arranged to set the angle or rake of the teeth relative to the body of the toothed blade. The tooth-setting apparatus 503 may be arranged to receive the strip 200, 250 from the mechanical machining apparatus 404 and therefore after removal of at least part of the heat affected portion 206. The angle of the teeth may be varied along the length of the strip material. This may allow toothed cutting blades with varying tooth rake to be made from a single length of strip material. In other embodiments, the angle may be constant along the length of the material. The tooth setting apparatus may comprise a mechanical mechanism arranged to engage the teeth of the strip material and push them away from alignment with the body of the strip material as it moves along the processing teeth through the production line.

The toothed blade production line 400, 500 may further comprise a dividing apparatus 504 arranged to divide the bi-metal strip material 200 into multiple toothed blade lengths 406. The dividing apparatus 504 may be arranged to receive the strip 200, 250 from the tooth-setting apparatus 503 (or the mechanical machining apparatus if the tooth setting apparatus is not provided) and therefore after removal of at least part of the heat affected portion 206 and setting of the individual teeth.

The dividing apparatus 502 may comprises a cutting tool or the like suitable for dividing the strip 200 into individual lengths. In other embodiments, the dividing apparatus 504 may comprise any device suitable for dividing the strip 200, 250 such as a grinding tool, milling tool or cutting torch.

The strip material 200, 250 may therefore comprise a length from which multiple individual toothed blades can be produced. The toothed blade production line may, for example be arranged to process a single length of strip material 200, 250, which may for example have a length restricted only by dimensional, or weight limitation, of the conveying mechanism to produce a plurality of individual saw blades 506.

In some embodiments, the method of producing a toothed blade may further comprise attaching a cutting tip to one or more of the plurality of teeth. The cutting tip may be welded onto the strip material at one or each of the teeth to provide a cutting surface. The cutting tip may comprise a carbide tip, hi-speed steel tip or any other metallic tip. The method may further comprise mechanically shaping (grinding or milling) the cutting tip to provide a final tip. This grinding process may be deeper than the mechanical grinding to remove the heat-affected portion resulting from the laser cutting of the tooth profile. The light mechanical machining step is still needed across the profile of the saw tooth, in addition to the deeper mechanical shaping of the welded metallic tip and they may be provided in separate machining processes. In some embodiments, a tooth tipping apparatus may be provided to weld a tip to the teeth once the heat-affected portion has been removed. The teeth tipping apparatus may further comprise a second mechanical machining apparatus to shape the tipped teeth.

## Claims

1. A method (100) of producing toothed blades from a strip material (200, 250), the method comprising:
laser cutting (102) the strip material (200, 250) to form a plurality of teeth in an edge of the strip material; and
mechanically machining (104) the strip material (200, 250) to remove at least part of a heat-affected portion (206) of the edge resulting from the laser cutting,
**characterized in that**
the method further comprises heat treating (302) the strip material (200, 250) before the laser cutting (102).

2. A method (100) according to claim 1, wherein the laser cutting (102) is controlled to restrict the extent of the heat affected portion (206), and optionally:
a) the laser cutting (102) is controlled by setting one or more parameters of a laser beam used to cut the strip material (200, 250), and preferably wherein the one or more parameters comprises the laser beam power or the laser beam focus; and/or
b) the laser cutting (102) is controlled by setting the rate of relative movement between the strip material (200, 250) and the laser beam used to cut the strip material (200, 250).

3. A method (100) according to claim 1 or claim 2, wherein a) the laser cutting (102) comprises near-net shaping of the strip material (200, 250), and/or b) the laser cutting (102) comprises cutting the strip material (200, 250) to produce a heat affected portion (206) extending less than 0.3 mm into a body of the strip material (200, 250).

4. A method (100) according to any preceding claim, wherein the strip material (200) comprises a bi-metal material, the bi-metal comprising first metal or metal alloy (202), and a second metal or metal alloy (206), and wherein the first metal or alloy is harder that the second metal or alloy, and wherein the laser cut edge of the bi-metal strip is formed from the first metal or alloy.

5. A method (100) according to any of claims 1 to 4, wherein the strip material (250) comprises a single metal or alloy, and wherein the laser cut edge of the strip is formed in the single metal or alloy.

6. A method (100) according to any preceding claim, further comprising setting (303) at least one of the plurality of teeth, wherein setting (303) the tooth comprises angling the respective tooth relative to the body of the strip material, and optionally:
a) the plurality of teeth are set to a varying angle along the length of the strip material; and/or
b) the tooth is set (303) after the mechanical machining step (104).

7. A method according to any preceding claim, further comprising providing relative conveying movement between the strip material (200, 250) and a laser cutting apparatus in which the laser cutting occurs, and between the strip material and a mechanical machining apparatus in which the mechanical machining occurs, and optionally any one or more of:
a) the relative conveying movement comprises conveying the strip material (200, 250) through the laser cutting apparatus, the mechanical machining apparatus and a heat treatment apparatus arranged to perform the heat treatment (302);
b) providing the relative movement comprises feeding the strip material (200, 250) from a spool, or coil, to the laser cutting apparatus; and/or
c) the relative conveying movement rate is between 0.5 m/min and 5 m/min.

8. A method according to any preceding claim: a) further comprising dividing (304) the strip material (200, 250) into multiple toothed blade lengths (506) following the mechanical machining step (104), and/or b) wherein the strip material (200, 250) comprises a length from which multiple toothed blades (506) can be produced.

9. A toothed blade production line (400) arranged to produce toothed blades from a strip material (200, 250), the production line comprising:
a laser cutting apparatus (402) arranged to cut a plurality of teeth into an edge of the strip material (200, 250);
a mechanical machining apparatus (404) arranged to remove at least part of a heat-affected portion (206) of the edge resulting from the laser cutting; **characterized in that** the production line further comprises
a heat treatment apparatus arranged (502) to heat treat the strip material before it is cut by the laser cutting apparatus (402).

10. A toothed blade production line according to claim 9, wherein any one or more of:
a) the laser cutting apparatus (402) is arranged to control the extent of the heat affected portion (206);
b) the laser cutting apparatus (402) is controlled to restrict the heat affected portion (206) by controlling the beam power or focus of a laser beam used to cut the strip material (200, 250), or the rate of relative movement between the strip material (200, 250) and the laser beam, or both;
c) the laser cutting apparatus (402) is arranged to produce a heat affected portion (206) extending less than 0.3 mm into a body of the strip material (200, 250); and/or
d) the laser cutting apparatus (402) comprises a pulsed fiber laser.

11. A toothed blade production line according to claim 9 or claim 10, wherein the strip material comprises a bi-metal strip material (200) having a first metal or alloy (202) and a second metal or alloy (204), and wherein the first metal or alloy is harder than the second metal or alloy, and wherein the edge of the metallic strip material is formed from the first metal or alloy, and preferably wherein the first metal is formed from a high-speed-steel grade material.

12. A toothed blade production line according to any of claims 9 to 10 wherein the strip material (250) comprises a single, non-composite alloy or metal (202), and preferably comprises a carbon or alloy steel grade material.

13. A toothed blade production line according to any of claims 9 to 12, further comprising a tooth setting apparatus (503) arranged to set at least one of the plurality of teeth, and optionally:
a) wherein the tooth setting apparatus (503) is arranged to set the teeth following the mechanical machining by the mechanical machining apparatus (404), and/or
b) wherein the tooth setting apparatus (503) is arranged to set the angle of the teeth such that the angle varies along the length of the strip material (200, 250).

14. A toothed blade production line according to any of claims 9 to 13, further comprising a conveying mechanism arranged to provide relative conveying movement between the strip material (200, 250) and the laser cutting apparatus (402) and between the strip material (200, 250) and the mechanical machining apparatus (404), and optionally:
a) the conveying mechanism is arranged to convey the strip material (200, 250) through the laser cutting apparatus (402), the mechanical machining apparatus (404) and the heat treatment apparatus (502); and/or
b) the toothed blade production line further comprises a feeder mechanism (406) for feeding the strip material (200, 250) from a spool, or coil, to the laser cutting apparatus.

15. A toothed blade production line according to any of claims 9 to 14:
a) further comprising a dividing apparatus (504) arranged to divide the strip material (200, 250) into multiple toothed blade lengths (506) after removal at least part of the heat affected portion (206), and/or
b) wherein the strip material (200, 250) comprises a length from which multiple toothed blades (506) can be produced.

## Patentansprüche

1. Verfahren (100) zur Herstellung von gezahnten Schneiden aus einem Streifenmaterial (200, 250), wobei das Verfahren umfasst:
Laserschneiden (102) des Streifenmaterials (200, 250), um eine Vielzahl von Zähnen in einer Kante des Streifenmaterials zu bilden; und
mechanisches Bearbeiten (104) des Streifenmaterials (200, 250), um wenigstens einen Teil eines wärmebeeinflussten Teils (206) der Kante, der durch das Laserschneiden entsteht, zu entfernen,
**dadurch gekennzeichnet, dass**
das Verfahren ferner Wärmebehandeln (302) des Streifenmaterials (200, 250) vor dem Laserschneiden (102) umfasst.

2. Verfahren (100) gemäß Anspruch 1, wobei das Laserschneiden (102) gesteuert wird, um die Ausdehnung des wärmebeeinflussten Teils (206) zu beschränken, und gegebenenfalls:
a) das Laserschneiden (102) durch Einstellen eines oder mehrerer Parameter eines zum Schneiden des Streifenmaterials (200, 250) verwendeten Laserstrahls gesteuert wird und wobei vorzugsweise der eine oder die mehreren Parameter die Laserstrahlleistung oder den Laserstrahlfokus umfassen; und/oder
b) das Laserschneiden (102) durch Einstellen der Rate von relativer Bewegung zwischen dem Streifenmaterial (200, 250) und dem zum Schneiden des Streifenmaterials (200, 250) verwendeten Laserstrahls gesteuert wird.

3. Verfahren (100) gemäß Anspruch 1 oder Anspruch 2, wobei a) das Laserschneiden (102) endkonturnahe Formgebung des Streifenmaterials (200, 250) umfasst und/oder b) das Laserschneiden (102) Schneiden des Streifenmaterials (200, 250), um einen wärmebeeinflussten Teil (206) zu erzeugen, der sich weniger als 0,3 mm in einen Körper des Streifenmaterials (200, 250) erstreckt, umfasst.

4. Verfahren (100) gemäß einem der vorstehenden Ansprüche, wobei das Streifenmaterial (200) ein Bimetallmaterial umfasst, wobei das Bimetall ein erstes Metall oder eine erste Metalllegierung (202) und ein zweites Metall oder eine zweite Metalllegierung (206) umfasst und wobei das erste Metall oder die erste Metalllegierung härter als das zweite Metall oder die zweite Metallegierung ist und wobei die lasergeschnittene Kante des Bimetallstreifens aus dem ersten Metall oder der ersten Metalllegierung gebildet wird.

5. Verfahren (100) gemäß einem der Ansprüche 1 bis 4, wobei das Streifenmaterial (250) ein einziges Metall oder eine einzige Metalllegierung umfasst und wobei die lasergeschnittene Kante des Streifens in dem einzigen Metall oder der einzigen Metalllegierung gebildet wird.

6. Verfahren (100) gemäß einem der vorstehenden Ansprüche, ferner umfassend Richten (303) von wenigstens einem aus der Vielzahl von Zähnen, wobei das Richten (303) des Zahns Winkeln des entsprechenden Zahns relativ zu dem Körper des Streifenmaterials umfasst, und gegebenenfalls:
a) die Vielzahl von Zähnen auf einen entlang der Länge des Streifenmaterials variierenden Winkel gerichtet werden; und/oder
b) der Zahn nach dem Schritt der mechanischen Bearbeitung (104) gerichtet (303) wird.

7. Verfahren gemäß einem der vorstehenden Ansprüche, ferner umfassend Bereitstellen von relativer Förderbewegung zwischen dem Streifenmaterial (200, 250) und einer Laserschneidvorrichtung, in der das Laserschneiden erfolgt, und zwischen dem Streifenmaterial und einer Vorrichtung zur mechanischen Bearbeitung, in der die mechanische Bearbeitung erfolgt, und gegebenenfalls eines oder mehrere von:
a) die relative Förderbewegung umfasst Befördern des Streifenmaterials (200, 250) durch die Laserschneidvorrichtung, die Vorrichtung zur mechanischen Bearbeitung und eine Wärmebehandlungsvorrichtung, die dafür beschaffen ist, die Wärmebehandlung (302) durchzuführen;
b) Bereitstellen der relativen Bewegung umfasst Zuführen des Streifenmaterials (200, 250) von einer Spule oder Wicklung zu der Laserschneidvorrichtung; und/oder
c) die Rate der relativen Förderbewegung beträgt zwischen 0,5 m/min und 5 m/min.

8. Verfahren gemäß einem der vorstehenden Ansprüche:
a) ferner umfassend Aufteilen (304) des Streifenmaterials (200, 250) zu mehreren gezahnten Schneidenstücken (506) nach dem Schritt der mechanischen Bearbeitung (104), und/oder b) wobei das Streifenmaterial (200, 250) eine Länge aufweist, aus der mehrere gezahnte Schneiden (506) erzeugt werden können.

9. Produktionsanlage (400) für gezahnte Schneiden, die zur Herstellung von gezahnten Schneiden aus einem Streifenmaterial (200, 250) beschaffen ist, wobei die Produktionsanlage umfasst:
eine Laserschneidvorrichtung (402), die dafür beschaffen ist, eine Vielzahl von Zähnen in eine Kante des Streifenmaterials (200, 250) zu schneiden;
eine Vorrichtung zur mechanischen Bearbeitung (404), die dafür beschaffen ist, wenigstens einen Teil eines wärmebeeinflussten Teils (206) der Kante, der durch das Laserschneiden entsteht, zu entfernen;
**dadurch gekennzeichnet, dass** die Produktionsanlage ferner umfasst:
eine Wärmebehandlungsvorrichtung (502), die dafür beschaffen ist, das Streifenmaterial mit Wärme zu behandeln, bevor es von der Laserschneidvorrichtung (402) geschnitten wird.

10. Produktionsanlage für gezahnte Schneiden gemäß Anspruch 9, wobei eines oder mehrere von:
a) die Laserschneidvorrichtung (402) dafür beschaffen ist, die Ausdehnung des wärmebeeinflussten Teils (206) zu steuern;
b) die Laserschneidvorrichtung (402) dafür gesteuert ist, den wärmebeeinflussten Teil (206) durch Steuern der Strahlleistung oder des Fokus eines zum Schneiden des Streifenmaterials (200, 250) verwendeten Laserstrahls oder der Rate von relativer Bewegung zwischen dem Streifenmaterial (200, 250) und dem Laserstrahl oder beidem zu beschränken;
c) die Laserschneidvorrichtung (402) dafür beschaffen ist, einen wärmebeeinflussten Teil (206) zu erzeugen, der sich weniger als 0,3 mm in einen Körper des Streifenmaterials (200, 250) erstreckt; und/oder
d) die Laserschneidvorrichtung (402) einen gepulsten Faserlaser umfasst.

11. Produktionsanlage für gezahnte Schneiden gemäß Anspruch 9 oder Anspruch 10, wobei das Streifenmaterial ein Bimetall-Streifenmaterial (200) umfasst, das ein erstes Metall oder eine erste Metalllegierung (202) und ein zweites Metall oder eine zweite Metalllegierung (204) umfasst und wobei das erste Metall oder die erste Metalllegierung härter als das zweite Metall oder die zweite Metalllegierung ist und wobei die Kante des metallischen Streifenmaterials aus der ersten Metall oder der ersten Metalllegierung gebildet wird und wobei vorzugsweise das erste Metall aus einem Material mit Hochgeschwindigkeitsstahlqualität besteht.

12. Produktionsanlage für gezahnte Schneiden gemäß einem der Ansprüche 9 bis 10, wobei das Streifenmaterial (250) eine einzige Nichtverbundstofflegierung oder ein einziges Metall (202) umfasst und vorzugsweise ein Material von Kohlenstoff- oder Legierungsstahlqualität umfasst.

13. Produktionsanlage für gezahnte Schneiden gemäß einem der Ansprüche 9 bis 12, ferner umfassend eine Zahnrichtvorrichtung (503), die dafür beschaffen ist, wenigstens einen aus der Vielzahl von Zähnen zu richten, und gegebenenfalls:
a) wobei die Zahnrichtvorrichtung (503) dafür beschaffen ist, die Zähne nach der mechanischen Bearbeitung durch die Vorrichtung zur mechanischen Bearbeitung (404) zu richten, und/oder
b) wobei die Zahnrichtvorrichtung (503) dafür beschaffen ist, den Winkel der Zähne so zu richten, dass der Winkel entlang der Länge des Streifenmaterials (200, 250) variiert.

14. Produktionsanlage für gezahnte Schneiden gemäß einem der Ansprüche 9 bis 13, ferner umfassend einen Fördermechanismus, der dafür beschaffen ist, relative Förderbewegung zwischen dem Streifenmaterial (200, 250) und der Laserschneidvorrichtung (402) und zwischen dem Streifenmaterial (200, 250) und der Vorrichtung zur mechanischen Bearbeitung (404) bereitzustellen, und gegebenenfalls:
a) der Fördermechanismus dafür beschaffen ist, das Streifenmaterial (200, 250) durch die Laserschneidvorrichtung (402), die Vorrichtung zur mechanischen Bearbeitung (404) und die Wärmebehandlungsvorrichtung (502) zu befördern; und/oder
b) die Produktionsanlage für gezahnte Schneiden ferner einen Zuführmechanismus (406) zum Zuführen des Streifenmaterials (200, 250) von einer Spule oder Wicklung zu der Laserschneidvorrichtung umfasst.

15. Produktionsanlage für gezahnte Schneiden gemäß einem der Ansprüche 9 bis 14:
a) ferner umfassend einen Aufteilmechanismus (504), der dafür beschaffen ist, das Streifenmaterial (200, 250) nach dem Entfernen wenigstens eines Teils des wärmebeeinflussten Teils (206) zu mehreren gezahnten Schneidenstücken (506) aufzuteilen, und/oder
b) wobei das Streifenmaterial (200, 250) eine Länge aufweist, aus der mehrere gezahnte Schneiden (506) erzeugt werden können.

## Revendications

1. Procédé (100) de production de lames dentées à partir d'un matériau en bande (200, 250), le procédé comprenant :
la découpe au laser (102) du matériau en bande (200, 250) pour former une pluralité de dents dans un bord du matériau en bande ; et
l'usinage mécanique (104) du matériau en bande (200, 250) pour retirer au moins une partie d'une portion altérée par la chaleur (206) du bord résultant de la découpe au laser,
**caractérisé en ce que** le procédé comprend en outre le traitement thermique (302) du matériau en bande (200, 250) avant la découpe au laser (102).

2. Procédé (100) selon la revendication 1, la découpe au laser (102) étant commandée pour limiter l'étendue de la portion altérée par la chaleur (206), et éventuellement :
a) la découpe au laser (102) étant commandée en réglant un ou plusieurs paramètres d'un faisceau laser utilisé pour découper le matériau en bande (200, 250), et de préférence le ou les paramètres comprenant la puissance du faisceau laser ou la focalisation du faisceau laser ; et/ou
b) la découpe au laser (102) étant commandée en réglant la vitesse du mouvement relatif entre le matériau en bande (200, 250) et le faisceau laser utilisé pour découper le matériau en bande (200, 250).

3. Procédé (100) selon la revendication 1 ou la revendication 2, a) la découpe au laser (102) comprenant une découpe de haute précision du matériau en bande (200, 250), et/ou b) la découpe au laser (102) comprenant la découpe du matériau en bande (200, 250) pour produire une portion altérée par la chaleur (206) s'étendant sur moins de 0,3 mm dans un corps du matériau en bande (200, 250).

4. Procédé (100) selon l'une quelconque des revendications précédentes, le matériau en bande (200) comprenant un matériau bimétallique, le bimétal comprenant un premier métal ou alliage métallique (202), et un second métal ou alliage métallique (206), et le premier métal ou alliage étant plus dur que le second métal ou alliage, et le bord découpé au laser de la bande bimétallique étant formé à partir du premier métal ou alliage.

5. Procédé (100) selon l'une quelconque des revendications 1 à 4, le matériau en bande (250) comprenant un seul métal ou alliage, et le bord découpé au laser de la bande étant formé dans le seul métal ou alliage.

6. Procédé (100) selon l'une quelconque des revendications précédentes, comprenant en outre le réglage (303) d'au moins une de la pluralité de dents, le réglage (303) de la dent comprenant l'inclinaison de la dent respective par rapport au corps du matériau en bande, et éventuellement :
a) la pluralité de dents étant réglée selon un angle variable sur la longueur du matériau en bande ; et/ou
b) la dent étant réglée (303) après l'étape d'usinage mécanique (104).

7. Procédé selon l'une quelconque des revendications précédentes, comprenant en outre la fourniture d'un mouvement de transport relatif entre le matériau en bande (200, 250) et un appareil de découpe au laser dans lequel la découpe au laser a lieu, et entre le matériau en bande et un appareil d'usinage mécanique dans lequel l'usinage mécanique a lieu, et éventuellement un ou plusieurs des éléments suivants :
a) le mouvement de transport relatif comprenant le transport du matériau en bande (200, 250) à travers l'appareil de découpe au laser, l'appareil d'usinage mécanique et un appareil de traitement thermique agencé pour effectuer le traitement thermique (302) ;
b) la fourniture du mouvement relatif comprenant l'acheminement du matériau en bande (200, 250) à partir d'une bobine, ou d'un rouleau, vers l'appareil de découpe au laser ; et/ou
c) la vitesse du mouvement de transport relatif étant comprise entre 0,5 m/min et 5 m/min.

8. Procédé selon l'une quelconque des revendications précédentes : a) comprenant en outre la division (304) du matériau en bande (200, 250) en de multiples longueurs de lames dentées (506) suivant l'étape d'usinage mécanique (104), et/ou b) le matériau en bande (200, 250) comprenant une longueur à partir de laquelle de multiples lames dentées (506) peuvent être produites.

9. Ligne de production de lames dentées (400) agencée pour produire des lames dentées à partir d'un matériau en bande (200, 250), la ligne de production comprenant :
un appareil de découpe au laser (402) agencé pour découper une pluralité de dents dans un bord du matériau en bande (200, 250) ;
un appareil d'usinage mécanique (404) agencé pour retirer au moins une partie d'une portion altérée par la chaleur (206) du bord résultant de la découpe au laser ; **caractérisé en ce que** la ligne de production comprend en outre un appareil de traitement thermique agencé (502) pour traiter thermiquement le matériau en bande avant qu'il ne soit découpé par l'appareil de découpe au laser (402).

10. Ligne de production de lames dentées selon la revendication 9, n'importe de l'un ou des éléments parmi :
a) l'appareil de découpe au laser (402) étant agencé pour commander l'étendue de la portion altérée par la chaleur (206) ;
b) l'appareil de découpe au laser (402) étant commandé pour limiter la portion altérée par la chaleur (206) en commandant la puissance du faisceau ou la focalisation d'un faisceau laser utilisé pour découper le matériau en bande (200, 250), ou la vitesse du mouvement relatif entre le matériau en bande (200, 250) et le faisceau laser, ou les deux ;
c) l'appareil de découpe au laser (402) étant agencé pour produire une portion altérée par la chaleur (206) s'étendant sur moins de 0,3 mm dans un corps du matériau en bande (200, 250) ; et/ou
d) l'appareil de découpe au laser (402) comprenant un laser à fibre pulsée.

11. Ligne de production de lames dentées selon la revendication 9 ou la revendication 10, le matériau en bande comprenant un matériau en bande bimétallique (200) ayant un premier métal ou alliage (202) et un second métal ou alliage (204), et le premier métal ou alliage étant plus dur que le second métal ou alliage, et le bord du matériau en bande métallique étant formé à partir du premier métal ou alliage, et de préférence le premier métal étant formé à partir d'un matériau de qualité acier rapide.

12. Ligne de production de lames dentées selon l'une quelconque des revendications 9 et 10, le matériau en bande (250) comprenant un seul alliage ou métal non composite (202), et comprenant de préférence un matériau de qualité acier au carbone ou allié.

13. Ligne de production de lames dentées selon l'une quelconque des revendications 9 à 12, comprenant en outre un appareil de réglage de dents (503) agencé pour régler au moins une de la pluralité de dents, et éventuellement :
a) l'appareil de réglage de dents (503) étant agencé pour régler les dents après l'usinage mécanique par l'appareil d'usinage mécanique (404), et/ou
b) l'appareil de réglage de dents (503) étant agencé pour régler l'angle des dents de telle sorte que l'angle varie le long de la longueur du matériau en bande (200, 250) .

14. Ligne de production de lames dentées selon l'une quelconque des revendications 9 à 13, comprenant en outre un mécanisme de transport agencé pour fournir un mouvement de transport relatif entre le matériau en bande (200, 250) et l'appareil de découpe au laser (402) et entre le matériau en bande (200, 250) et l'appareil d'usinage mécanique (404), et éventuellement :
a) le mécanisme de transport étant agencé pour transporter le matériau en bande (200, 250) à travers l'appareil de découpe au laser (402), l'appareil d'usinage mécanique (404) et l'appareil de traitement thermique (502) ; et/ou
b) la ligne de production de lames dentées comprenant en outre un mécanisme d'alimentation (406) pour acheminer le matériau en bande (200, 250) à partir d'une bobine, ou d'un rouleau, vers l'appareil de découpe au laser.

15. Ligne de production de lames dentées selon l'une quelconque des revendications 9 à 14,
a) comprenant en outre un appareil de division (504) agencé pour diviser le matériau en bande (200, 250) en de multiples longueurs de lames dentées (506) après le retrait d'au moins une partie de la portion altérée par la chaleur (206), et/ou
b) le matériau en bande (200, 250) comprenant une longueur à partir de laquelle de multiples lames dentées (506) peuvent être produites.
